# EUROPEAN PATENT APPLICATION

(11) **EP 1 362 769 A1**
(43) Date of publication of application: **19.11.2003**
(21) Application number: 03076399.9
(22) Date of filing: 07.05.2003
(51) Int. Cl.: B62D 25/24, B62D 65/00

(54) **Expandible conical hole plugs**

(30) Priority: 17.05.2002 GB 0211268
(71) Applicant: L & L Products Inc., Romeo, MI 48065 (US)
(72) Inventor: Mendiboure, Jean, Core Products, 67129 Molsheim, Cedex (FR); Undereiner, Jean-Jacques, Core Products, 67129 Molsheim, Cedex (FR)
(74) Representative: Bawden, Peter Charles

(57) **Abstract**

Conical plugs are provided which are foamable and may be placed in incompletely filled holes in structures to prevent corrosion over time; preferably the plugs are made of a foamable material which can be foamed in the e coat oven used in automobile manufacture.

## Description

The present invention relates to plugs for holes and in particular to plugs that may be used to block holes in the components of vehicles, ships, boats and aircraft during and after assembly and treatment.

During the manufacture of vehicles, ships, boats and aircraft components are used which may contain holes. Holes may also be provided in components, particularly structural components to enable assembly, to allow for drainage of fluids or allow for passage of cabling and the like. In many instances it is necessary to seal and/or close the holes after assembly to reduce the likelihood of subsequent corrosion. This is because in some instances the holes are not used in assembly, thus providing a location for potential corrosion. In other instances although material, such as cabling or tubing, passes through the holes the hole is not filled and the rim of the hole remains a location for potential corrosion, this may be the case when tubing is used to contain electrical wiring or when other tubes such as drainage tubes are present.

Currently the holes are either left open or are closed by forcing mastic into the holes, generally by hand. In the production of automobiles the mastic is generally applied after the automobile has been subject to the e coat anticorrosion process. In the e coat anti-corrosion process the metal frame of the vehicle is passed through a bath of anticorrosion fluid and the anticorrosion material is deposited on the metal parts of the vehicle by an electrolysis process in which the metal frame of the vehicle is used as one of the electrodes. After the e coat process the vehicle is baked to dry and consolidate the anticorrosion coating. Subsequently the vehicle after assembly will be painted. It is important that the holes be filled prior to painting to minimise contamination due to the paint.

The use of manually applied mastic to fill the holes has the disadvantage that in order to ensure that the holes are sealed one generally uses an excess of the mastic. This is expensive and can also result in some mastic passing through the holes leading to contamination and extra weight in the vehicle, ship, boat or aircraft. There is also the possibility that overtime the mastic will degrade and/or fall away from the hole providing a site for potential corrosion.

The present invention provides a plug that overcomes these problems.

The present invention therefore provides a plug comprising a conical section extending from a base said conical section being made from an expandable material.

In a preferred embodiment the conical section is made from a flexible and expandable material. In a further preferred embodiment the conical section is hollow and the base material is circular.

The conical section enables the thinner part of the section to pass through the hole and a thicker part can bear against the perimeter of the hole to hold the plug in place during processing. In a further embodiment the material of the base is also expandable and in the preferred embodiment the conical section and the base are integrally moulded from the expandable material and the material is preferably flexible. Alternatively the plugs may be made by extrusion.

In use the plug may be used as the sole means of closing the hole or it may be used as a support for a sealant, such as a mastic, thus reducing the amount of mastic required and ensuring that mastic does not pass through the hole, this in turn reduces waste and undesirable deposits. The hole may therefore be closed by placing the conical section of the plug through the hole and then subjecting the structure to conditions which cause the expandable material of the plug to foam and fill the hole. Optionally a layer of a sealant such as a mastic may be applied onto the side of the base section remote from the conical section. Any such further sealant may be applied before or after the expandable material has been foamed.

The size of the plug may be chosen according to the size of the hole to be filled. However in the manufacture of automobiles the holes produced in the vehicle frame may be any shape, if they are circular they are typically 5 to 50 millimeters more typically 5 to 10 millimeters in diameter and accordingly the conical section is generally such that at least part of the conical section passes through a hole of this size. The base of the plug is preferably of a size that it will not pass through the hole. In this way the plug is prevented from passing through the hole. In some instances the plug may pass entirely into the hole. The plug may also be provided with an extension protruding from the base at the side opposite from the conical section to aid location in the hole and enable verification that a plug has been placed in the hole. This is particularly useful if the entire plug passes into the hole.

The flexibility of the base of the plug and the ease of installation may be increased by forming small incisions such as cuts around the perimeter of the base. In this way the flexibility of the conical section and the flexibility of the base can enable a single size of plug to be used with a variety of hole sizes. The incisions also reduce the resistance which can act to force the plug back out of the hole. The incisions or gaps in the base may also allow flow of fluid such as the e coat anticorrosion fluid through the hole. In addition the conical section of the plug may be shaped to allow flow of fluids such as the e coat fluid. For example the conical section may be provided with one or more vanes.

The use of the plug will now be described in relation to automobile manufacture wherein the automobile is subjected to the e coat anti-corrosion process. The vehicle sub frame is assembled in the normal manner and then plugs according to the present invention are inserted into any unused or incompletely filled holes in the vehicle sub frame. The vehicle sub frame is then subjected to the e coat process. Following the e coat the sub frame is baked in a curing oven. The expandable material from which the plug is made is preferably selected so that it expands under the conditions employed in the curing oven. The expandable material therefore foams in the curing oven and fills the hole to effect a seal, the expansion is preferably such that the foamed material encapsulates the rim of the hole. Where the hole has little depth the expandable material may foam so that it encapsulates both sides of the hole so that the entire surface of the hole is provided with a protective layer. Where the hole is at the end of an elongated tube the expanded material may encapsulate only one rim. Subsequently, if desired, a sealant, such as mastic, may be applied to the surface of the expanded plug, which serves to retain the sealant and prevent it passing through the hole to ensure effective use of the sealant.

The plug is made of an expandable material so that it will expand to fill the hole. The material may also be such that, on expansion, it will bond to the interior wall of the structure. Accordingly, the plug may be made from an expandable adhesive material, which can be activated to expand (typically foam) and optionally to act as an adhesive. Accordingly the expandable adhesive must expand at the desired temperature and in a preferred embodiment be sufficiently adhesive to firmly bond to the component in which the hole is formed.

Prior to activation, the material or materials from which the plug is made is preferably dry and not tacky to the touch, since this facilitates shipping and handling and prevents contamination. The plug is preferably made of a flexible material and thermoplastic materials such as ethylene polymers and copolymers used as raw materials for acoustic baffles are preferred, preferred materials are copolymers of ethylene and vinyl acetate or ethylene acrylate copolymers.

The foamable material may also be chosen to also provide some rigidity and reinforcement to the overall structure. In this instance examples of other preferred foamable materials include foamable epoxy-base resins and examples of such materials are the products L5206, L5207, L5208 and L5209, which are commercially available from L & L Products of Rome Michigan USA, and the Core Products Core 5204, 5206, 5205 and 5208 available from Core Products, Strasbourg, France. The material should be chosen according to the rate of expansion and foam densities required where the plugs of the invention are used in automobile manufacture. It is further preferred that the material expand at the temperatures experienced in the electro-coat baking oven, typically 160°C to 180°C more typically 130°C to 150°C.

The plus may be made extrusion, stamping and die cutting, mini applicator or by injection moulding providing that the temperatures used in fabrication are below the temperatures at which the expandable material will foam.

Examples of uses of the plugs include the filling of holes formed in the A, B and/or C pillars or the rails in the frames or chassis and engine supports of vehicles, the holes being formed for passage of cabling or tubing or for various attachments. Alternatively the plugs may be used to fill the ends of tubing such as the tubing used to reinforce vehicle doors against side or front impact.

The invention is illustrated by the accompanying drawings in which:
Figure 1 shows plugs according to the present invention.
Figure 2 shows two plugs according to the present invention inserted in holes in a vehicle component.
Figure 3 shows a component of a vehicle in which a hole has been filled by the foaming of a plug according to the present invention.
Figures 4 and 5 show the use of a plug according to the present invention to fill the hole in the end of a tube that is used for side reinforcement of automobile doors. Figure 4 shows the location of the reinforcing tube in the door and Figure 5 is an enlarged view of the end of the tube shown in Figure 4 the end being provided with a hole plug (prior to foaming).
Figures 6 and 7 show an alternate form of a plug of the invention.
Figure 8 shows the alternate form of plug shown in Figures 6 and 7 inserted in a hole.

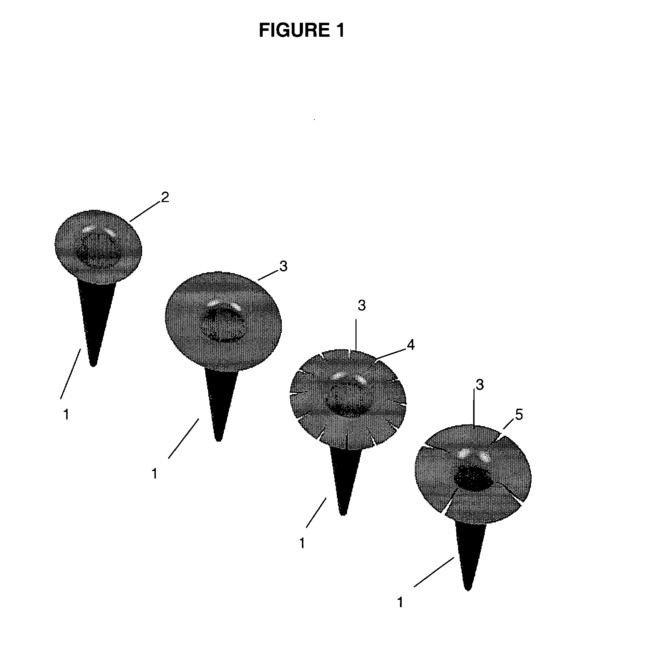

Figure 1 shows four somewhat different plugs according to the present invention in each plug the conical Section (1) is the same but one plug is provided with a narrow circular base (2), the second plug is provided with a wider circular base (3). In the third plug the circular base (3) is provided with 12 slits (4) to enhance flexibility and in the fourth plug the base is provided with 4 larger slits (5) to enhance flexibility.

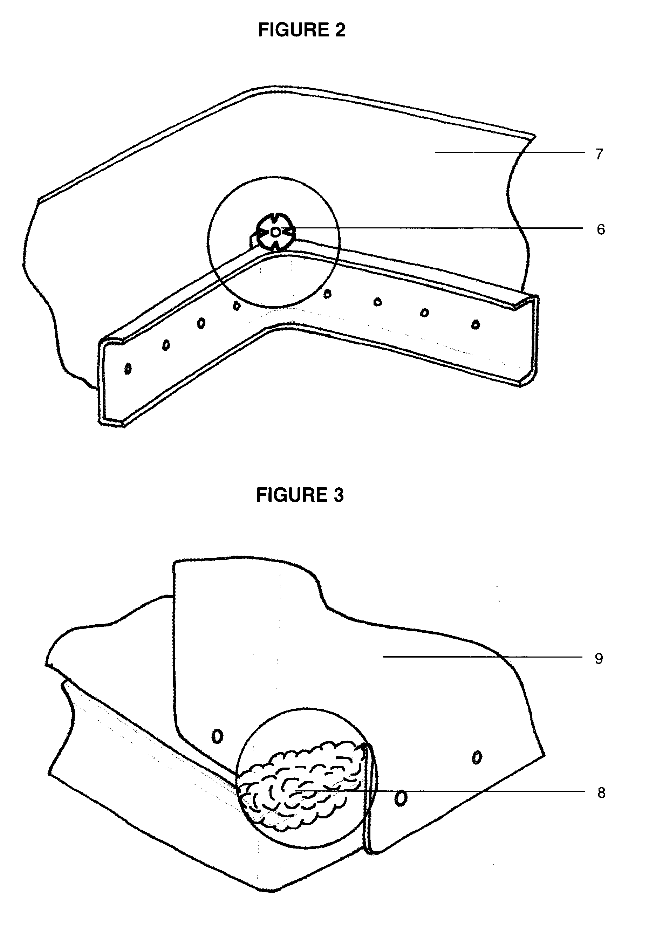

In Figure 2 the two plugs (6) are circled and shown inserted in holes in a vehicle door frame (7).

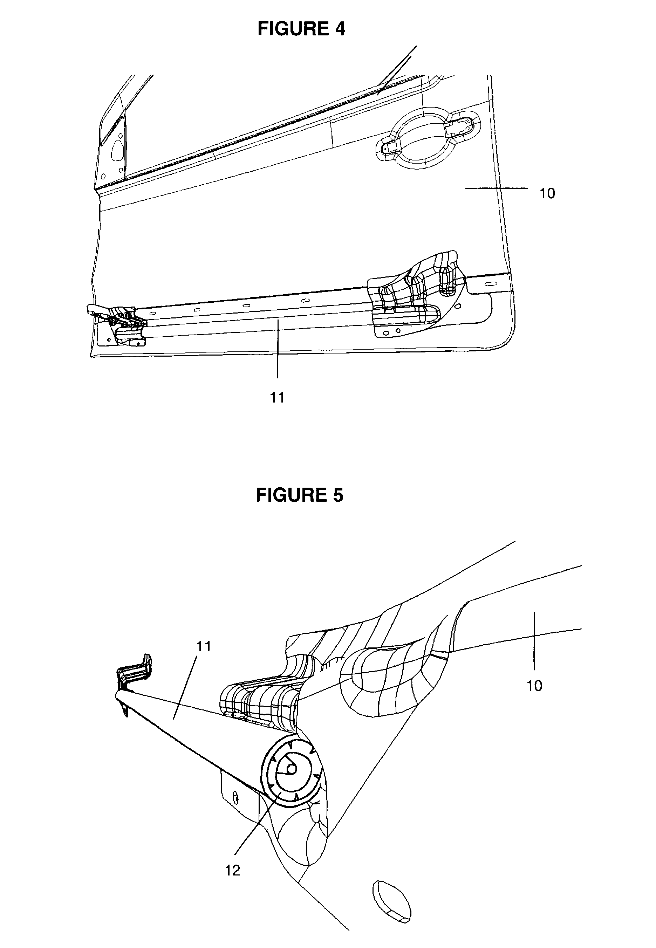

In Figure 3 a plug (8) in its foamed shape is shown blocking a hole in an automobile component (9).

Figure 4 shows the inside of a vehicle door (10) in which is mounted a tube (11) to provide protection against side and front impact, in the finished vehicle the tube will not be visible due to the presence of the door fascia.

Figure 5 is an expanded view of the portion of Figure 4 that contains the tube (11) and shows a plug (12) placed in hole at the end of tube (11). Figure 5 shows the system prior to expansion of the material of plug (12) but it is clear that when the material expands the material will adhere to and encapsulate the entire end of the tube (11) providing comprehensive protection for the end of the tube.

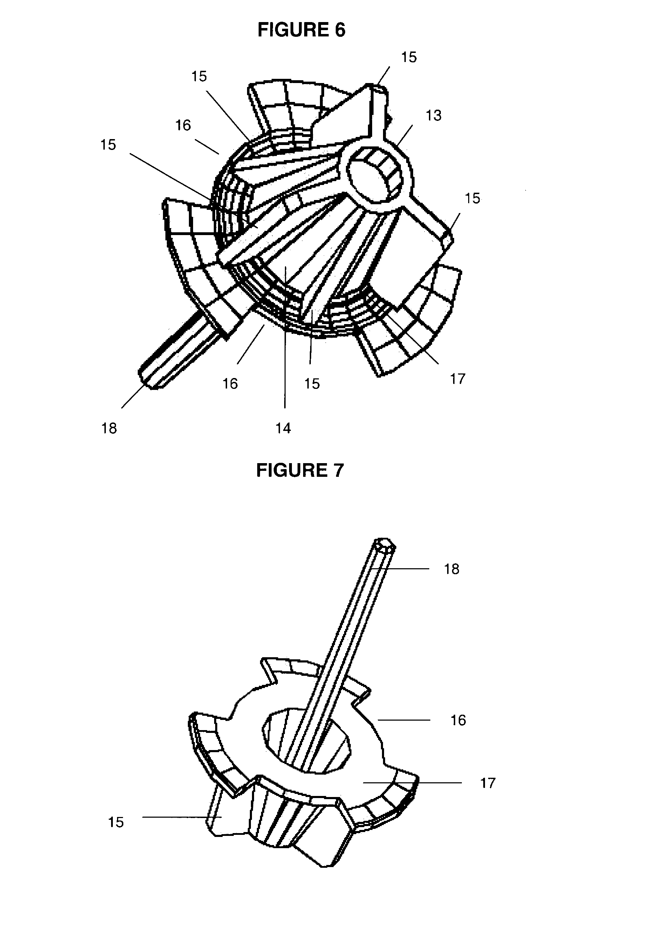

Figures 6 and 7 show a plug (13) in which the conical section (14) is provided with vanes (15) to provide channels for the flow of the e coat fluid prior to expansion. Incisions (16) are provided in the base section (17) to allow for flow of the e coat fluid. The plug is also provided with an extension (18) on the side remote from the conical section to enable location of the plug is a hole.

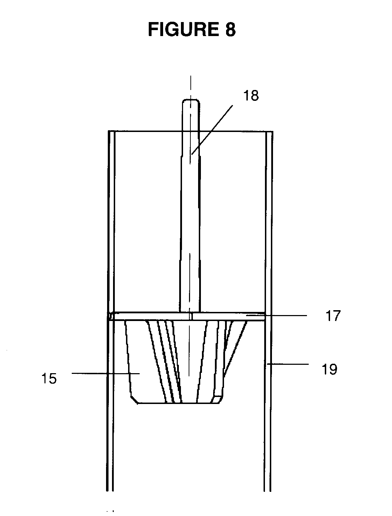

Figure 8 shows the plug of Figure 6 located in a hole (19).

## Claims

1. A plug comprising a conical section extending from a base said conical section being made from an expandable material.

2. A plug according to Claim 1 in which the conical section is made from a material that is flexible and expandable.

3. A plug according to Claim 1 or Claim 2 in which the conical section is hollow.

4. A plug according to any of the preceding Claims in which the base is circular.

5. A plug according to any of the preceding Claims in which the conical section and the base are integrally moulded from the expandable material.

6. A plug according to any of the preceding Claims in which the maximum diameter of the conical section is 5 to 50 millimeters.

7. A plug according to Claim 6 in which the maximum diameter of the conical section is 5 to 10 millimeters.

8. A plug according to any of the preceding Claims having incisions formed around the perimeter of the base.

9. A plug according to any of the preceding claims in which the conical section is provided with channels.

10. A plug according to Claim 9 in which the channels are defined by vanes formed on the conical section.

11. A plug according to any of the preceding claims provided with an extension on the side of the base remote from the conical section.

12. A plug according to any of the preceding Claims in which the expandable material is an expandable adhesive material, which can be activated to expand (typically foam) and also act as an adhesive.

13. The use of a plug according to any of the preceding Claims to fill holes in automobile frames.

14. The use of a plug according to any of the Claims 1 to 12 to fill the one or more holes in the end of tubing.

15. A process in relation to automobile manufacture wherein a vehicle sub frame is assembled and one or more plugs according to any of Claims 1 to 12 are inserted into unused or incompletely filled holes in the vehicle sub frame.

16. A process according to Claim 15 in which the vehicle sub frame in which the plugs have been inserted is subjected to the e coat process and following the e coat the sub frame is baked in a curing oven whereby the expandable material expands under the conditions in the curing oven.

17. A process for the provision of corrosion protection around a hole comprising filling the hole with protective material and encapsulating the perimeter of the hole at each surface of the hole with protective material wherein a plug having a conical section made of an expandable material and having a minimum diameter such that it will pass through the hole and a base of a size that will not pass through the hole is inserted into the hole and after insertion of the plug it is subjected to conditions whereby the expandable material expands to fill the hole and to encapsulate the perimeter of the hole at each surface of the hole.

18. A process according to Claim 17 in which the hole is an automobile component.

19. A process according to Claim 17 or Claim 18 in which the plug is inserted prior to subjecting the automobile component to the e coat process and subjecting the component to the e coat process whereby the expandable material expands under the conditions of the curing of the e coat.
